**Europäisches Patentamt**

**European Patent Office**

**Office européen des brevets**

(19)

(11) Veröffentlichungsnummer: **0 292 932 B1**

# EUROPÄISCHE PATENTSCHRIFT

(12)

(45) Veröffentlichungstag der Patentschrift: **11.12.91**

(51) Int. Cl.⁵: **B01D 51/08, E01H 13/00**

(21) Anmeldenummer: **88108317.4**

(22) Anmeldetag: **25.05.88**

(54) Verfahren und Vorrichtung zum kontrollierten Abbau einer Aerosolwolke.

(30) Priorität: **26.05.87 LU 86900**

(43) Veröffentlichungstag der Anmeldung:
**30.11.88 Patentblatt 88/48**

(45) Bekanntmachung des Hinweises auf die
Patenterteilung:
**11.12.91 Patentblatt 91/50**

(84) Benannte Vertragsstaaten:
**BE DE ES FR GB GR IT LU NL**

(56) Entgegenhaltungen:
**GB-A- 445 775**
**GB-A- 1 154 020**
**US-A- 3 606 153**
**US-A- 4 462 483**
**US-A- 4 475 921**

(73) Patentinhaber: **EUROPÄISCHE ATOMGEMEIN-
SCHAFT (EURATOM)**
**Bâtiment Jean Monnet Plateau du Kirchberg**
**L-2920 Luxembourg(LU)**

(72) Erfinder: **Magill, Joseph**
**Fritz-Erler-Strasse 9**
**W-7500 Karlsruhe 1(DE)**

(74) Vertreter: **Weinmiller, Jürgen**
**Lennéstrasse 9 Postfach 24**
**W-8133 Feldafing(DE)**

EP 0 292 932 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein Verfahren und eine Vorrichtung zum kontrollierten Abbau einer Aerosolwolke mit Hilfe gerichteter Schallwellen grosser Intensität im hörbaren oder Ultraschall-Frequenzbereich.

Es sind bereits Verfahren bekannt, mit denen störende Partikel in der Luft durch physikalische und/oder chemische Mittel und Maßnahmen beseitigt oder aus dem Sichtfeld entfernt werden können, vgl. Patentdokument US-A-3.606.153. Zu diesen Verfahren gehört auch die Bestrahlung der Partikel mit Schall- und Ultraschallwellen, die vom Boden oder Schiff aus durch entsprechende Schallsender gezielt auf die Partikelwolken, zumeist Nebel, gerichtet werden. Die Beschallung hat den Zweck, die Partikel zu verdichten und zu koagulieren, so daß sie durch ihr Gewicht zu Boden sinken.

Im Patentdokument GB-A-1154.020 ist eine Ultraschallsirene zur Verwendung auf Schiffen beschrieben, die zwei Schallwellen gleicher Frequenz im Bereich von 16 bis 22 kHz aussendet, welche in der Phase um 180° gegeneinander verschoben sind. Die Intensität der Beschallung ist veränderlich einstellbar.

Bei Beschallung von Nebel mit Frequenzen im hörbaren Bereich werden sehr hohe Schallfeldintensitäten von mindestens 150 dB benötigt, um zu einer befriedigenden Partikelkoagulation zu kommen.

Aufgabe der vorliegenden Erfindung ist es, ein Beschallungsverfahren anzugeben, das besonders für den Abbau von Aerosolwolken aus der Luft bei Großunfällen in kerntechnischen und chemischen Anlagen geeignet ist, bei denen radioaktive und/oder giftige Partikelwolken in die Luft gelangen. Die daraus für die Menschen und die Umwelt resultierenden Gefahren wegen der atmosphärischen Ausbreitung der gefährlichen Substanzen über möglicherweise mehrere hundert Kilometer können so beträchtlich verringert werden. Das Verfahren zielt insbesondere darauf ab, die Partikel so zu beeinflussen, daß sie eingesammelt werden können. Dies ist mit den erwähnten bekannten Methoden nicht möglich.

Gegenstand der Erfindung ist demgemäß ein Verfahren zum kontrollierten Abbau einer Aerosolwolke mit Hilfe gerichteter Schallwellen großer Intensität im hörbaren oder Ultraschall-Frequenzbereich, dadurch gekennzeichnet, daß die Schallwellen von einem dicht an der Wolke operierenden Fluggerät abgestrahlt werden, wobei das Frequenzspektrum der Welle aus einer Grundfrequenz und einer Überlagerungsfrequenz des doppelten Frequenzwerts besteht, die in der Phase um 90° gegen die Grundfrequenz verschoben ist, so daß die Wolkenpartikel koagulieren und sich in Richtung zur Schallquelle bewegen, und daß die Partikel dann am Fluggerät eingesammelt werden.

Bezüglich von bevorzugten Ausführungsformen des erfindungsgemäßen Verfahrens und der Vorrichtung zur Durchführung dieses Verfahrens wird auf die Ansprüche 2-7 verwiesen.

Laborversuche mit Rauch haben gezeigt, daß bei dieser Beschallungsweise in Verbindung mit genügend hohem Schalldruck eine intensive Koagulation der Partikel, verbunden mit einer raschen auf den Schallsender gerichteten Bewegung der vergrößerten Partikel, ausgelöst wird. Zusätzlich löst das Frequenzspektrum starke Kräfte auf die vergrößerten Partikel in Richtung auf den Schallsender aus. Zum Beispiel ergab sich bei Beschallung einer bis zu 1 m entfernten Rauchwolke und einem Schalldruck von 160 dB binnen 5 Sekunden eine Zusammenballung der Partikel auf Teilchen mit dem 60-fachen Volumen. Es können aufgrund von Messungen der Driftkräfte an Partikeln von 100 $\mu$m Durchmesser, welche im Schallfeld schweben, Driftgeschwindigkeiten bis zu 1 ms$^{-1}$ bei vergrößerten Teilchen erwartet werden.

Diese gerichtete rasche Wanderbewegung der koagulierten Teilchen läßt sich besonders vorteilhaft zur Bekämpfung gefährlicher Aerosolwolken und zu deren kontrolliertem Abbau nutzen, wenn der Schallsender und die Mittel zum Einsammeln der Partikel von einem Fluggerät an die Wolke herangesteuert werden. Denn auf diese Weise werden die Nachteile der bekannten, von der Erd- oder Wasseroberfläche aus operierenden Beschallungstechniken vermieden. Diese Nachteile bestehen hauptsächlich darin, daß die bekämpften Aerosole immer nur aus der gleichen Richtung, nämlich von der Erdoberfläche her, beschallt werden können, daß dabei im Prinzip immer große Distanzen zwischen Schallsender und Wolke überbrückt werden müssen, was hohe Energieverluste in der Luft, insbesondere wegen akustischer Sättigung, verursacht, und daß im besten Fall nur ein unkontrolliertes Abregnen der Aerosole erreicht werden kann, was bei radioaktiven und giftigen Aerosolen wieder Probleme aufwirft.

Wenn die Dichte der Partikel in der Wolke gering ist, kann es vorteilhaft sein, ergänzend zur Beschallung Saataerosole in die zu bekämpfende Wolke einzubringen, wozu sich wiederum ein Fluggerät besonders gut eignet.

Natürlich kann die Aerosolwolke auch von mehreren, nötigenfalls unterschiedlichen Fluggeräten aus bekämpft werden, und zusätzlich von einer ortsfesten oder beweglichen Sendestation am Boden.

Nachfolgend wird die Erfindung anhand dreier Figuren näher erläutert.

Fig. 1 zeigt eine aus einer havarierten Kernkraftanlage austretende Aerosolwolke und schematisch die Anwendung des erfindungsgemäßen Verfahrens an dieser Wolke.

Fig. 2 zeigt schematisch eine Vorrichtung zur Durchführung dieses Verfahrens für den Anbau an ein Luftschiff.

Fig. 3 zeigt eine Schallquelle mit Partikelsammelvorrichtung schematisch im Schnitt.

Eine Aerosolwolke, wie sie bei einem nuklearen Unfall in einer Großanlage auftreten kann, hat beispielsweise folgende Eigenschaften:

Wolkendurchmesser: 100 Meter
Wolkenvolumen: $5 \times 10^5 \, m^3$
Partikelkonzentration: $10^{12} \, m^{-3}$
Abstand zwischen den Partikeln: 100 $\mu m$
mittlerer Partikeldurchmesser: 1 $\mu m$
Anzahl der Partikel: $5 \times 10^{17}$
Dichte eines Partikels: $1g \, cm^{-3}$
Massenladung: $1g \, m^{-3}$

Es ist davon auszugehen, daß die Partikeldurchmesser stark variieren. Wenn der Partikeldurchmesser kleiner als 0,1 $\mu m$ ist, dann bewirkt bereits die Braun'sche Bewegung rasch eine Kollision von Partikeln untereinander und deren Koagulation. Wenn der Partikeldurchmesser dagegen sehr groß ist, z.B. größer als 15 $\mu m$, dann führt die Schwerkraft zu einer raschen Sedimentierung dieser Partikel und zu deren Absetzen am Boden in unmittelbarer Nähe der havarierten Anlage. Daraus ergibt sich, daß die besonders gefährlichen, da von den atmosphärischen Strömungen weit fortgetragenen Partikel Durchmesser zwischen 0,1 und 15 $\mu m$ haben und durch das erfindungsgemäße Verfahren erfaßt werden müssen.

Um die Wechselwirkung zwischen einer Schallwelle und solchen Partikeln zu verstehen, muß man die Masse der Partikel berücksichtigen: Kleine Partikel verhalten sich wie Gaspartikel in einer Schallwelle und werden von dieser mitgerissen. Bei größeren Partikeln dämpfen Trägheitseffekte die Bewegung der Partikels. Die Bewegung solcher Partikel nimmt also mit zunehmender Masse oder steigender Frequenz der Schallwelle ab. Bei einer gegebenen Schallfrequenz bewegen sich also Partikel mit unterschiedlichen Massen sehr unterschiedlich schnell, so daß die Partikel miteinander kollidieren und koagulieren. Durch Einwirkung von Schallwellen ausreichender Intensität und geeigneter Frequenz ist es also bekanntlich möglich, die Partikelgröße in einem Aerosol zu vergrößern, so daß die Partikel durch die Schwerkraft aus der Wolke abregnen und sich nicht mehr weiter mit den atmosphärischen Strömungen verbreiten können.

Die Erfindung geht aber einen Schritt weiter, indem sie das Abregnen der Aerosole auf den Boden durch die Erzeugung einer zur Schallquelle hin gerichteten Driftbewegung der Partikel weitgehend unterbindet und die Partikel in einer Sammelvorrichtung am Fluggerät auffängt. Die für den gesamten Vorgang der Koagulation und des Driftens verantwortlichen Kräfte sind die mittlere Stokes-Kraft und die mittlere Oseen-Kraft.

Die Stokes-Kraft beruht auf der Temperaturabhängigkeit der Viskosität in einem Fluid. Bei einer adiabatischen Kompression des Fluids, verursacht durch eine Schallwelle, steigt die Temperatur des Fluids erst an und sinkt dann in der zweiten Schallhalbwelle wieder ab. Das Produkt aus der Fluidgeschwindigkeit und der Viskosität ergibt über einen Zyklus einen mittleren Wert, der zu einer Drift des Partikels in Richtung auf die Schallquelle führt. Es läßt sich zeigen, daß in Luft bei 20°C und bei Atmosphärendruck eine Schallwelle mit einem Schalldruckpegel von 151 dB eine Drift mit einer Geschwindigkeit von 0,66 cm/s erzeugt.

Außerdem wird die sogenannte Oseen-Kraft zusätzlich wirksam. Diese Kraft ist beispielsweise in der Zeitschrift Journ. Acoustic Soc. of America Vol. 22, 1950, Seite 319 ff und Vol. 23, 1951, Seiten 312-315 definiert. Sie beruht auf der Verzerrung der Wellenform bei höheren Amplituden und ist von der Temperaturvariation in der Schallwelle unabhängig. Dagegen hängen die Größe und die Richtung dieser Kraft stark vom Verzerrungsgrad, insbesondere von der Phasenverschiebung zwischen der Grundfrequenz und dem Doppelten der Grundfrequenz ab, sofern die Schallwelle insbesondere diese Komponenten enthält. Am größten ist diese Kraft in Richtung auf die Quelle hin für eine Phasendifferenz von +90° zwischen diesen Komponenten.

Anhand der Zeichnungen sei nun die praktische Ausgestaltung des erfindungsgemäßen Verfahrens und der hierfür notwendigen Vorrichtungen erläutert.

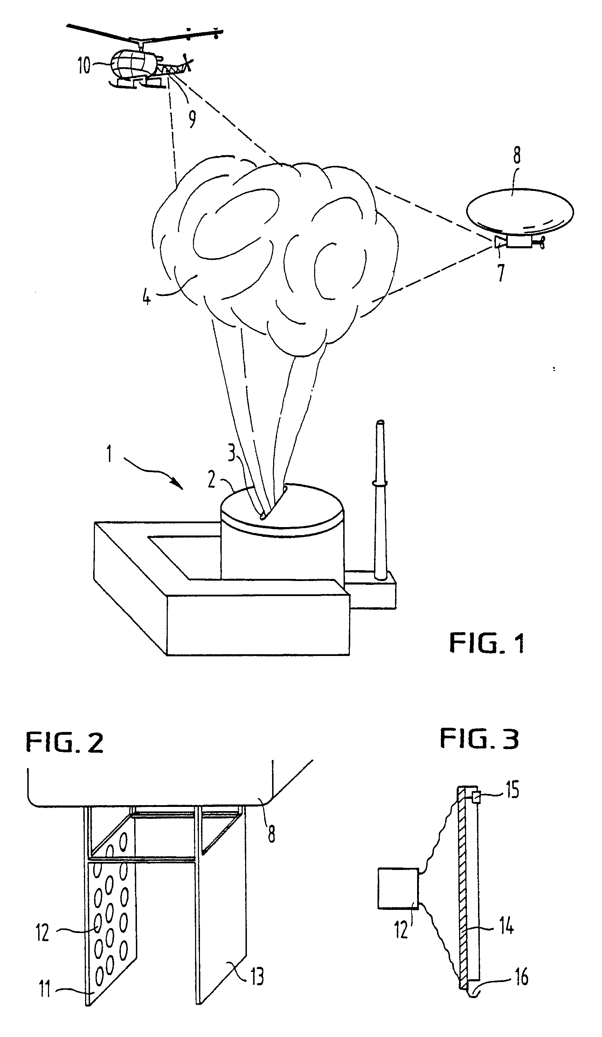

Fig. 1 zeigt eine kerntechnische Anlage 1 mit einem Reaktorbehälter 2, der aufgrund eines Unfalls einen Riß 3 im Dach bekommen hat. Durch diesen Riß treten radioaktive Stoffe aus und bilden in der Umgebungsluft eine Aerosolwolke 4 mit den weiter oben angegebenen Kennwerten. Durch die Erfindung soll die Weiterverbreitung der radioaktiven Aerosolpartikel durch die atmosphärischen Luftbewegungen verhindert werden.

Die Bekämpfung bzw. der Abbau der Wolke ist im vorliegenden Fall für zwei Fluggeräte gezeigt; nämlich ein Luftschiff 8 und ein Hubschrauber 10. Beide sind mit einem Schallsender, z.B. einer Sirene 7 bzw. 9 zur Aussendung des erfindungsgemäßen Schallsignals ausgestattet, wobei der beschallte Bereich durch die gestrichelten Linien angedeutet ist. Statt einer einzelnen Sirene kann auch eine Matrixanordnung 11 transduktorgesteuerter Lautsprecher 12 vorgesehen werden, wie sie in Fig. 2 schematisch dargestellt ist.

Ein ferngesteuertes Fluggerät kann auch unmittelbar in die Wolke hineingesteuert werden, so daß die Koagulations- und Driftwirkung der Beschallung noch intensiver wird, als bei Beschallung von der Peripherie der Wolke aus.

Besonders intensiv ist die Schallwirkung, wenn die Partikel in der Aerosolwolke einem Feld stehender Schallwellen ausgesetzt sind. Dies kann erreicht werden, indem, wie Fig. 2 für den Fall einer Beschallungsvorrichtung mit Lautsprechern 12 in einem Matrixgerüst 11 zeigt, gegenüber dem Gerüst unter Belassung eines Zwischenabstandes eine Reflektorwand 13 angebracht wird, die natürlich ebenso wie das Gerüst 11 am Luftschiff 8 befestigt wird. Das Gerüst 11 kann in bei Verwendung an einem Fluggerät mit weniger Sirenen bestückt sein als bei Verwendung an Bodenstationen. Der Abstand zwischen der Reflektorwand 13 und dem Gerüst 11 beträgt z.B. 10 m. Bei einer Driftgeschwindigkeit von 20 cm pro Sekunde würde der Zwischenraum zwischen dem Gerüst 11 und der Reflektorwand 13 innerhalb weniger Sekunde gereinigt, so daß das Luftschiff langsam in der Wolke hin- und herbewegt werden kann, um die verschiedenen Wolkenbereiche zu bearbeiten. Im übrigen ist zu bemerken, daß ein Luftschiff auch den Vorteil hat, ohne weitere Steuerungsmaßnahmen mit dem Wind in der Wolke mitzudriften.

In Fig. 3 ist eine einzelne, zugleich als Lautsprecher und Sammelvorrichtung wirkende Vorrichtung schematisch im Schnitt dargestellt, bei der die Schallenergie unmittelbar mittels elektrischer Energie erzeugt wird. Vor der schallerzeugenden Membran des Lautsprechers 12 ist eine für Schallwellen durchlässige Auffangwand 14 angebracht, auf die die herandriftenden Partikel auftreffen und die zusammen mit einem senkrecht verstellbaren Abstreifer 15 eine Kollektorvorrichtung für die ankommenden Partikel bildet. Der Abstreifer wird periodisch über die Fläche geführt und befördert die Partikel in eine Sammelrinne 16, von wo sie durch nicht gezeigte Mittel abgeführt oder abgesaugt werden.

Es wurde bereits erwähnt, daß die mittlere Oseen-Kraft zu besonders hohen Driftgeschwindigkeiten führt, wenn erfindungsgemäß die Schallwellen eine Grundfrequenz (z.B. 20 kHz) und die dazu um 90° phasenverschobene erste Oberwelle (40 kHz) als Hauptkomponenten des Emissionsspektrums enthalten. Ein solches Spektrum kann z.B. mit entsprechend elektrisch angesteuerten piezoelektrischen oder magnetostriktiven Wandlern erzeugt werden. Auch sind inzwischen akustische Transduktoren entwickelt worden, die bis zu 80% der eingespeisten elektrischen Leistung in Schallleistung umsetzen. Aber auch mit entsprechend abgestimmten Pfeifen oder Sirenen oder als Verbrennungsmotoren wirkenden Schallerzeugern kann das erfindungsgemäße Verfahren betrieben werden, wenn nur der Schallpegel ausreichend hoch ist.

Die Erfindung ist nicht auf die Behandlung von radioaktiven Aerosol-Wolken begrenzt, sondern kann überall eingesetzt werden, wo unerwünschte Aerosolwolken aus der Luft entfernt werden sollen. Dies gilt beispielsweise bei Chemieunfällen, Verkehrsunfällen mit Tanklastwagen oder bei der Bekämpfung von hochliegenden Nebelbänken im Bereich von Flughäfen.

Wenn speziell eine Gaswolke bekämpft und abgebaut werden soll, kann sie durch Einsprühen von Saatpartikeln wie aktiviertem Kohlenstoff oder Zeolith in die Gaswolke vorbehandelt werden. Die Adsorption des Gases an die Kohlenstoff- oder Zeolithpartikel wird bei hoher Schallfeldintensität durch die Zerstörung der viskosen Grenzschicht um das Partikel verstärkt. Danach werden die Saatpartikel zusammen mit den adsorbierten Gasmolekülen von der Schallquelle in der oben erläuteren Art und Weise abgesaugt.

Auch wenn die Massenladung einer zu bekämpfenden Partikelwolke unter 1 g/m$^3$ fällt oder liegt, empfiehlt es sich, ein Saataerosol in die Wolke einzusprühen, damit der Koagulationseffekt wieder in Gang kommt oder überhaupt eintritt. Zweckmäßig sollten daher die Fluggeräte Saataerosol mit sich führen und Sprühapparate zur Impfung der Wolke, sowie ggfs. Sonden zur Feststellung der Teilchendichte.

Als besonders einfach herzustellendes Saataerosol eignet sich Rauch aus verbrennenden Autoreifen. Verbrennendes Reifengummi bildet einen dichten schwarzen Rauch, der nicht nur die Massengesamtladung der Wolke bedeutend steigert, sondern daneben auch eine optische Beobachtung der Bewegung der bekämpften Wolke und der Wirksamkeit der Beschallung ermöglicht. Gleichzeitig entsteht bei der Verbrennung von manchen Gummiarten viel Wasserdampf, wodurch die Effizienz des akustischen Koagulationsprozesses weiter erhöht wird. Könnte man z.B. 5% einer nach Dichte und Durchmesser der Rauchteilchen optimierten Gummimasse in Aerosolteilchen umsetzen, so könnte mit einer am Ort der gefährdeten Kernkraft- oder Chemieanlage gelagerten Menge von 10$^4$ kg Gummi eine Massenladung 1 gm$^{-3}$ über ein Volumen von 5x10$^5$ m$^3$, erzeugt werden.

Andere geeignete Saataerosole sind sehr feine Wassernebel oder Wasserdampf. Die Sprühmittel sind in der Zeichnung nicht dargestellt, da es sich hier um klassische Bauteile handelt.

Für das erfindungsgemäße Verfahren kommen grundsätzlich Frequenzen zwischen 100 Hz und 50 kHz in Betracht. Je niedriger die Frequenzen liegen, desto geringer ist die Dämpfung der Schallenergie durch die Luftmasse. Gerade die Nahbekämpfung von Aerosolwolken durch Fluggeräte macht es leichter, auf Frequenzen über 20 kHz zu gehen.

**Patentansprüche**

1. Verfahren zum kontrollierten Abbau einer Aerosolwolke mit Hilfe gerichteter Schallwellen großer Intensität im hörbaren oder Ultraschall-Frequenzbereich, dadurch gekennzeichnet, daß die Schallwellen von einem dicht an der Wolke (4) operierenden Fluggerät (8, 10) abgestrahlt werden, wobei das Frequenzspektrum der Welle aus einer Grundfrequenz und einer Überlagerungsfrequenz des doppelten Frequenzwerts besteht, die in der Phase um 90° gegen die Grundfrequenz verschoben ist, so daß die Wolkenpartikel koagulieren und sich in Richtung zur Schallquelle bewegen, und daß die Partikel dann am Fluggerät eingesammelt werden.

2. Verfahren nach Anspruch 1, dadurch gekennzeichnet, daß zusätzlich Saatpartikel in die Aerosolwolke eingebracht werden, derart, daß die Koagulation erleichtert wird.

3. Verfahren nach Anspruch 2, dadurch gekennzeichnet, daß zum Abbau einer Gaswolke gleichzeitig Saatpartikel in die Gaswolke eingebracht werden und die Schallwellen auf die Wolke einwirken, wodurch die Adsorption der Gasmoleküle an diesen Partikeln verstärkt wird.

4. Vorrichtung zur Durchführung des Verfahrens nach Anspruch 1, dadurch gekennzeichnet, daß das an oder in der Wolke operierende Fluggerät mit mindestens einem Schallsender (7, 9, 12) und mit Mitteln (14 bis 16) zum Aufsammeln der koagulierten Partikel ausgestattet ist.

5. Vorrichtung nach Anspruch 4, dadurch gekennzeichnet, daß das an oder in der Wolke operierende Fluggerät mit Mitteln zur Einbringung von Saatpartikeln, z.B. einer Sprühvorrichtung, in die Wolke ausgestattet ist.

6. Vorrichtung nach Anspruch 4 oder 5, dadurch gekennzeichnet, daß auf einem Matrixgerüst (11), das am Fluggerät (8, 10) befestigt ist, eine Vielzahl von Schallsendern (12) nebeneinander aufgebaut sind, die synchron angesteuert werden.

7. Vorrichtung nach einem der Ansprüche 4 bis 6, dadurch gekennzeichnet, daß jeder Schallsender (12) zur Erzeugung einer stehenden Schallwelle mit einem Reflektor (13) zusammenwirkt, der einstellbar gegenüber dem Sender angeordnet ist.

**Claims**

1. A process for the controlled disposal of an aerosol cloud by means of directed sound waves of high intensity and of frequencies in the audible or ultrasonic range, characterized in that the sound waves are emitted by an aircraft (8, 10) operating close to the periphery of the cloud (4), the frequency spectrum of the wave consisting of a basic frequency and a superposed frequency of twice the basic frequency value and phase-shifted by 90° in relation to the basic frequency, so as to cause the particles to coagulate and to migrate towards the sound source, and that the particles are then collected at the aircraft.

2. A process according to claim 1, characterized in that in addition seed particles are injected into the aerosol cloud, such that coagulation is facilitated.

3. A process according to claim 2, characterized in that, for the disposal of a gas cloud, simultaneously seed particles are injected into the gas cloud and sound waves are impacting upon the cloud, whereby the adsorption of the gas molecules to the particles is enhanced.

4. A device for the implementation of the process according to claim 1, characterized in that the aircraft operating close to or within the cloud is equipped with at least one sound transmitter (7, 9, 12) and with means (14 to 16) for collecting the coagulated particles.

5. A device according to claim 4, characterized in that the aircraft operating close to or within the cloud is equipped with means, e.g. a spray device, for introducing seed particles into the cloud.

6. A device according to claim 4 or 5, characterized in that a plurality of synchroneously operated sound transmitters (12) is mounted side by side on a matrix structure (11) fixed to the aircraft (8, 10).

7. A device according to one of claims 4 to 6, characterized in that each sound transmitter (12) cooperates with a reflector (13), which is adjustably mounted opposite the transmitter, in order to generate a stationary sound wave.

**Revendications**

1. Méthode pour la diminution contrôlée d'un nuage d'aérosol à l'aide d'ondes acoustiques dirigées de grande intensité dans le domaine audible ou ultrasonore, caractérisée en ce que les ondes acoustiques sont émises par un appareil volant (8, 10) opérant à proximité du nuage (4), le spectre des fréquences de l'onde étant composé d'une fréquence de base et d'une fréquence harmonique d'une valeur double qui présente un écart de phase de 90° par rapport à la fréquence de base, de sorte que les particules du nuage coagulent et se déplacent en direction de la source acoustique, et que les particules peuvent alors être ramassées sur l'appareil volant.

2. Méthode selon la revendication 1, caractérisée en ce qu'on introduit à titre additionnel des particules de sémence dans le nuage d'aérosol de sorte que la coagulation soit facilitée.

3. Méthode selon la revendciation 2, caractérisée en ce que, pour diminuer un nuage de gaz, on introduit simultanément des particules de sémence dans le nuage de gaz et on fait agir les ondes acoustiques sur le nuage, ce qui augmente l'adsorption des molécules gazeux sur ces particules.

4. Dispositif pour la mise en oeuvre du procédé selon la revendication 1, caractérisé en ce que, l'appareil volant se trouvant près du ou dans le nuage, il est muni d'au moins un émetteur acoustique (7, 9, 12) et de moyens (14 à 16) permettant de ramasser les particules coagulées.

5. Dispositif selon la revendication 4, caractérisé en ce que, l'appareil volant se trouvant près du ou dans le nuage, il est équippé de moyens pour introduire des particules de sémence dans le nuage, tels qu'un dispositif d'injection.

6. Dispositif selon la revendication 4 ou 5, caractérisé en ce que plusieurs émetteurs acoustiques (12) sont montés en juxtaposition sur un bâti matriciel (11) qui est monté sur l'appareil volant (8, 10), ces émetteurs étant commandés en synchronisme.

7. Dispositif selon l'une des revendications 4 à 6, caractérisé en ce que chaque émetteur acoustique (12) coopère avec un réflecteur (13) en vue d'engendrer une onde acoustique stationnaire, le réflecteur étant monté de façon ajustable à l'opposé de l'émetteur.

FIG. 1

FIG. 2

FIG. 3